(19) Europäisches Patentamt
European Patent Office
Office européen des brevets

(11) Publication number: 0 360 544 A2

(12) # EUROPEAN PATENT APPLICATION

(21) Application number: 89309476.3

(22) Date of filing: 19.09.89

(51) Int. Cl.5: C08L 81/02 , C08L 71/12 , C08L 25/00

(30) Priority: 20.09.88 JP 233576/88
22.09.88 JP 238571/88
22.09.88 JP 238572/88
10.01.89 JP 1916/89
10.01.89 JP 1917/89

(43) Date of publication of application: 28.03.90 Bulletin 90/13

(84) Designated Contracting States: BE DE FR GB NL

(71) Applicant: UBE INDUSTRIES, LTD.
12-32, Nishihonmachi 1-chome
Ube-shi, Yamaguchi-ken(JP)

(72) Inventor: Nishiyama, Masao c/o Ube Industries, Ltd.
Hirakata Kenkyusho 3-10, Nakamiyakitamachi
Hirakata-shi Osaka(JP)
Inventor: Ohtsuki, Kaoru c/o Ube Industries, Ltd.
Hirakata Kenkyusho 3-10, Nakamiyakitamachi
Hirakata-shi Osaka(JP)
Inventor: Nakakita, Yuuji c/o Ube Industries, Ltd.
Hirakata Kenkyusho 3-10, Nakamiyakitamachi
Hirakata-shi Osaka(JP)
Inventor: Ozawa, Hideki c/o Ube Industries, Ltd.
Hirakata Kenkyusho 3-10, Nakamiyakitamachi
Hirakata-shi Osaka(JP)

(74) Representative: Atkinson, Peter Birch et al
Marks & Clerk Suite 301 Sunlight House
Quay Street
Manchester M3 3JY(GB)

(54) **Thermoplastic resinous composition.**

(57) A thermoplastic resinous composition with satisfactory mechanical properties and thermal properties and an enhanced molding workability comprises a polyarylenesulfide (PPS) resin, a polyphenyleneether (PPE) resin, an epoxy group-containing vinyl compound copolymer, which is a copolymerization product of a vinyl compound and an ethylenically unsaturated aliphatic glycidyl compound, and optionally, a carboxylic anhydride group-containing styrene or olefin polymer or an epoxy resin-curing agent, which PPS resin may be preliminarily modified with the epoxy group-containing vinyl compound copolymer.

EP 0 360 544 A2

Xerox Copy Centre

# THERMOPLASTIC RESINOUS COMPOSITION

## BACKGROUND OF THE INVENTION

### 1) Field of the Invention

The present invention relates to a thermoplastic resinous composition. More particularly, the present invention relates to a thermoplastic resinous composition comprising, as an indispensable component, a polyarylenesulfide resin and useful for forming shaped articles, for example, parts of machines, vehicles, and electric and electronic devices, having an excellent mechanical strength comparable to shaped articles made from a polyarylenesulfide resin alone, and an enhanced impact strength and heat-resistance.

### 2) Description of the Related Art

It is known that polyarylenesulfide resins, typically polyphenylenesulfide (PPS) resins, exhibit an excellent mechanical strength, chemical resistance and flame-retarding property and thus can be widely utilized for producing parts of electric and electronic devices and of vehicles requiring a high rigidity and heat resistance.

Nevertheless, the PPS resins exhibit a relatively low elongation and impact strength, a poor softness, a relatively low glass transition temperature and a greatly reduced mechanical strength at a high temperature, and thus the utilization thereof is restricted.

Also, the PPS resin has a relatively low melt viscosity and thus is disadvantageous in that, when injection-molded, undesirable burrs, fins, flashes and lands are easily formed and the molding workability of the resin is unsatisfactory.

To raise the melt viscosity, an attempt was made to cross-link the PPS resin at a temperature close to the melting point thereof, but the control of the degree of cross-linkage was very difficult. Namely, if the cross-linkage is excessive, the resultant modified PPS resin exhibits a poor molding workability, and includes gels generated in the modified PPS molecules, and thus the resultant shaped article exhibits a reduced mechanical property.

Further, the PPS resin has a very poor elongation and impact strength, and thus is very brittle.

To eliminate this disadvantage, an attempt was made to reinforce the PPS resin article with a reinforcing material, for example, glass fibers.

Nevertheless, although the glass fiber-reinforced PPS resin article exhibits an enhanced impact strength, the reinforcing fibers can not enhance the elongation of the resin article. Also, the addition of the reinforcing fibers results in an increased viscosity and decreased mobility and molding-workability of the resultant PPS resin-reinforcing fiber mixture, and thus the resultant shaped article has a poor surface smoothness and an unsatisfactory appearance.

To eliminate the above-mentioned disadvantages, a number of attempts were made to provide thermoplastic resinous compositions comprising the polyarylenesulfide (PPS) resin and an engineering plastic resin, for example, a polyphenyleneether (PPE) resin, and having improved properties, and to provide a method of modifying the compositions.

For example, Japanese Unexamined Patent Publication No. 50-156,561 discloses a resinous composition comprising a PPS resin and a PPE resin; Japanese Unexamined Patent Publication No. 55-135,160 discloses a thermoplastic resinous composition comprising a PPS resin, a PPE resin and a polyamide resin or saturated polyester resin mixed together in specific mixing proportions; Japanese Unexamined Patent Publication No. 56-115,355 discloses a thermoplastic polymeric composition comprising at least one thermoplastic resin selected from polyoxymethylene resins, polycarbonate resins, modified polycarbonate resins, polysulfone resins, modified polysulfone resins, polyphenyleneether (PPE) resins, modified PPE resins, polyarylenesulfide (PPS) resins and modified PPS resins, and a modified block copolymer comprising a backbone block copolymer consisting of an aromatic vinyl compound and a conjugated diene compound, and attached with molecular units having dicarboxylic acid radicals or derivatives thereof; Japanese Unexamined Patent Publication No. 58-157,859 discloses a thermoplastic resinous composition comprising a PPS resin and a modified PPE resin grafted with a styrene compound polymer; Japanese Unexamined Patent Publication No. 59-164,360 discloses a thermoplastic resinous composition comprising a PPS resin, a PPE resin and an epoxy resin; Japanese Unexamined Patent Publication No. 59-213,758

discloses a thermoplastic resinous composition comprising a PPS resin, a PPE resin or polyamide resin, and an epoxy resin; Japanese Unexamined Patent Publication No. 61-200,166 discloses a polyarylenesulfide resin composition comprising a PPS resin, a grafted or block copolymer compatible with the PPS resin and having a hydrophilic property, and an organic or inorganic filler; and Japanese Unexamined Patent Publication No. 63-17,297 discloses a modified block copolymer composition comprising at least one thermoplastic resin selected from polyoxymethylene resins, polycarbonate resins and modifications thereof, polysulfone resins and modifications thereof, nitrile compound polymers, PPE resins and modifications thereof, and PPS resins and modifications thereof, and a modified block copolymer resin comprising a backbone polymer having at least one aromatic vinyl compound polymer block A and at least one olefin compound polymer block B, and attached with molecular units having carboxylic acid radicals or derivatives thereof.

Further, Japanese Unexamined Patent Publication No. 63-118,369 discloses a polyphenylenesulfide resin composition comprising a PPS resin, a modified polymer comprising a hydrogenated conjugated diene polymer or hydrogenated conjugated diene-aromatic vinyl hydrocarbon copolymer, grafted with an unsaturated carboxylic acid or derivative thereof, and an epoxy resin.

Nevertheless, these thermoplastic PPS compositions are not satisfactory due to an insufficient enhancement of the elongation or impact strength and to a deterioration of the mechanical and thermal properties.

## SUMMARY OF THE INVENTION

An object of the present invention is to provide a thermoplastic resinous composition containing, as an indispensable component, a polyarylenesulfide resin, and useful for producing shaped articles having an enhanced elongation, impact strength and thermal workability and satisfactory other mechanical and thermal properties comparable to articles made of the polyarylenesulfide resin alone.

Another object of the present invention is to provide a thermoplastic resinous composition containing, as an indispensable component, a polyarylenesulfide resin useful for forming shaped articles having an excellent impact strength and other mechanical strengthes without employing a reinforcing material.

The above-mentioned objects can be realized by the thermoplastic resinous composition of the present invention, which comprises:

(A) a principal thermoplastic resinous ingredient comprising:

(a) 20 to 100% by weight of a polyarylenesulfide resin; and

(b) 0 to 80% by weight of a polyphenyleneether resin; and

(B) an additional resinous ingredient comprising (c) at least one type of vinyl compound copolymer having epoxy groups, which is a copolymerization product of at least one vinyl compound and at least one ethylenically unsaturated aliphatic glycidyl compound, in an amount of 1 to 60% based on the weight of the principal resinous ingredient.

## DESCRIPTION OF THE PREFERRED EMBODIMENTS

The thermoplastic resinous composition of the present invention comprises a principal thermoplastic resinous ingredient (A) and an additional resinous ingredient (B) in an amount of 1 to 140% based on the weight of the principal resinous ingredient.

The principal resinous ingredient (A) comprises 20 to 100 parts by weight, preferably 20 to 98% by weight, of a polyarylenesulfide resin (a) and 0 to 80% by weight, preferably, 2 to 80% by weight, of a polyphenyleneether resin (B).

The polyarylenesulfide resin (a) preferably comprises at least one member selected from those having 70 to 100 molar%, preferably, 80 to 100 molar%, of p-phenylenesulfide repeating units of the formula (I):

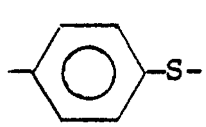

(I)

and 0 to 30 molar% preferably 0 to 20 molar%, of at least one type of non-p-phenylenesulfide type aromatic repeating units.

The polyarylenesulfide resin having at least 70 molar% of p-phenylenesulfide repeating units of the

formula (I) causes the resultant thermoplastic resinous composition to exhibit a satisfactory heat resistance, chemical resistance, and mechanical property. When the content of the p-phenylenesulfide repeating units of the formula (I) is less than 70 molar%, the resultant thermoplastic resinous composition exhibits an unsatisfactory heat resistance.

The non-p-phenylenesulfide type repeating units can be selected from those of the formulae:

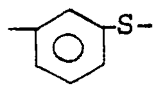

(m-phenylenesulfide unit)

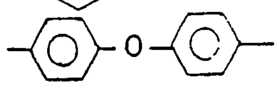

(diphenyleneether unit)

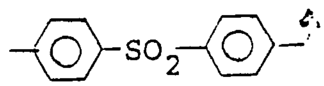

(diphenylenesulfone unit)

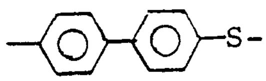

(biphenylsulfide unit)

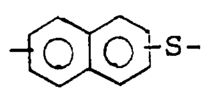

(naphthylenesulfide unit)

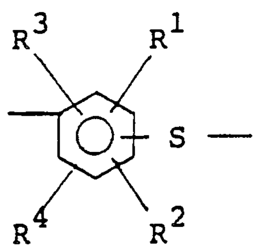

(substituted phenylene-sulfide unit)

and

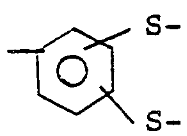

(trivalent phenylene-disulfide unit)

wherein $R^1$, $R^2$, $R^3$, and $R^4$ represent, respectively and independently, a member selected from the group consisting of a hydrogen atom, alkyl radicals having 1 to 12 carbon atoms, alkoxy radicals having 1 to 12 carbon atoms, a phenyl radical, and a nitro radical, at least one of $R^1$ to $R^4$ not being a hydrogen atom.

The polyarylenesulfide resin usable for the present invention preferably has a melt flow rate of 5 g/10 min to 10,000 g/10 min, more preferably 5 g/10 min to 500 g/10 min, determined by a melt indexer in accordance with ASTM D 1238-74T, at a temperature of 315 °C under a load of 5 kg.

The polyarylenesulfide resin is available, under the trademark of Ryton PPS, from Philips Oil Co., or under the trademark of Tohpren from Tohpren Co., or under the trademark of Susteel from Toso Susteel, or under the trademark of Fortron from Kureha Kagaku Kogyo K.K.

The polyphenyleneether resin usable for the present invention preferably comprises at least one type of p-phenyleneether type polymer having the repeating units of the formula (II):

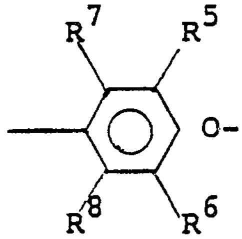

(II)

wherein $R^5$ and $R^6$ represent, respectively and independently, a monovalent group selected from the group consisting of hydrocarbon groups having 1 to 8 carbon atoms, hydrocarbonoxy groups having 1 to 8 carbon atoms, halogenated hydrocarbon groups having 1 to 8 carbon atoms and halogenated hydrocarbonoxy groups having 1 to 8 carbon atoms, and $R^7$ and $R^8$ represent, respectively and independently, a member selected from the group consisting of monovalent hydrocarbon groups having 1 to 8 carbon atoms and a hydrogen atom.

Generally, the polyphenyleneether resin usable for the present invention is prepared by polymerizing at least one member selected from the phenol compounds, for example, 2,6-dimethylphenol, 2,6-diethylphenol, 2-methyl-6-ethylphenol, 2-methyl-6-allylphenol, 2-methyl-6-phenylphenol, 2,6-diphenylphenol, 2,6-dibutylphenol, 2-methyl-6-propylphenol, 2,3,6-trimethylphenol, 2,3-dimethyl-6-ethylphenol, 2,3,6-triethylphenol, 2,3,6-tripropylphenol, 2,6-dimethyl-3-ethylphenol and 2,6-dimethyl-3-propylphenol.

Preferable polyphenyleneether resins are homopolymer of 2,6-dimethylphenol, and copolymers of 2,6-dimethylphenol with 2,3,6-trimethylphenol or 2,6-diphenylphenol.

Also, the polyphenyleneether resin preferably has a limiting viscosity number ($\eta$) of 0.3 to 3.0, more preferably 0.4 to 2.0, determined at a concentration of 0.5% in a solvent consisting of chloroform at a temperature of 30 °C.

The polyphenyleneether resin may be copolymerized with a styrene compound monomer or mixed with a styrene compound polymer. The additional resinous ingredient (B) comprises, as an indispensable component (c) 1 to 60%, based on the weight of the principal resinous ingredient (A), of at least one type of vinyl compound copolymer having an epoxy group, which are copolymerization products of at least one vinyl compound and at least one ethylenically unsaturated aliphatic glycidyl compound; and optionally, 1 to 80%, based on the weight of the principal resinous ingredient (A), of at least one member selected from the group consisting of: (d) modified styrene compound copolymers having terminal carboxylic anhydride groups, which are reaction products of at least one styrene compound copolymer with at least one unsaturated carboxylic anhydride compound; and (e) modified olefin polymers having terminal carboxylic anhydride groups, which are reaction products of at least one olefin polymer with at least one unsaturated carboxylic anhydride compound.

In the epoxy group-containing vinyl compound copolymers (c), the vinyl compound is preferably selected from ethylenically unsaturated polymerizable monomers, for example, ethylene, propylene, butene-1, pentene-1, 4-methyl pentene-1, isobutylene, 1,4-hexadiene, dicyclopentadiene, 2,5-norbornadiene, 5-ethyl-2,5-norbornadiene, 5-ethylidenenorbornene, 5-(1-propenyl)-2-norbornene, butadiene, isoprene, styrene, methyl styrenes, vinylxylenes, dichloreostyrenes, bromostyrenes, dibromostyrenes, p-tert-butyl styrene, ethylstyrenes, vinyl naphthalenes, acrylonitrile, methyl acrylate, methyl methacrylate, ethyl acrylate, and ethyl methacrylate.

The most preferable vinyl compound is styrene.

Also, the ethylenically unsaturated aliphatic glycidyl compound is preferably selected from those of the formula (III) and (IV):

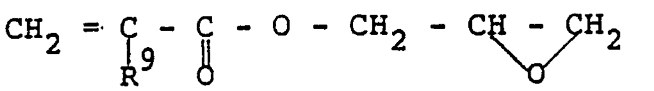 (III)

and

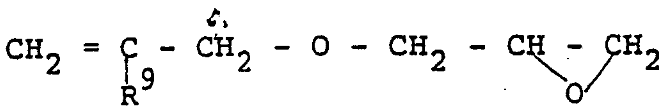 (IV)

wherein $R^9$ represents a member selected from the group consisting of a hydrogen atom and monovalent hydrocarbon groups having 1 to 8 carbon atoms. The compounds of the formula (III) are glycidyl esters of $\alpha,\beta$-unsaturated aliphatic carboxylic acids. The compounds of the formula (IV) are ethylenically unsaturated aliphatic glycidyl ethers.

Specifically, the unsaturated glycidyl compound is selected from glycidyl acrylate, glycidyl methacrylate, glycidyl ethacrylate, glycidyl itaconate, allylglycidylether, vinylglycidylether. A preferable glycidyl compound is glycidyl methacrylate.

The epoxy group-containing vinyl compound copolymer is produced from the vinyl compound monomer and the ethylenically unsaturated aliphatic glycidyl compound by a bulk polymerization, solution polymerization, suspension polymerization or emulsion polymerization in accordance with a radical polymerization method. During the polymerization, the vinyl compound monomer may be directly copolymerized with the unsaturated glycidyl compound. Alternatively, the vinyl compound monomer is preliminarily

polymerized and then the vinyl compound polymer is copolymerized with the unsaturated glycidyl compound. The copolymerization of the vinyl compound copolymer with the unsaturated glycidyl compound can be easily carried out in a relatively short reaction time by a melt-mixing reaction in a melt extruder, cokneader or Banbury mixer.

The epoxy group-containing vinyl compound copolymer may be in any form of a random copolymer, block copolymer and graft copolymer, but is preferably in the form of a random copolymer.

The epoxy group-containing vinyl compound copolymer usable for the present invention, preferably has a number average molecular weight of 3,000 to 120,000, more preferably 5,000 to 70,000, still more preferably 5,000 to 50,000.

The number average molecular weight of the epoxy group-containing vinyl compound copolymer can be controlled by controlling the amount of a radical initiating agent to be added to the copolymerization system or the copolymerization temperature. When the number average molecular weight of the epoxy group-containing vinyl compound copolymer is less than 3,000 or more than 120,000, the resultant copolymer sometimes exhibits an unsatisfactory compatibility or reaction activity to the principal resinous ingredient (A), especially the polyarylenesulfide resin, and thus the quality of the mechanical properties, for example, elongation and impact strength, of the resultant resinous composition is sometimes unsatisfactory.

In the preparation of the epoxy group-containing vinyl compound copolymer, the vinyl compound and the ethylenically unsaturated aliphatic glycidyl compound are used preferably in a weight ratio of 40:60 to 99.5:0.5, more preferably 60:40 to 99 to 1.

The epoxy group-containing vinyl compound copolymer (C) is in a content of 1 to 60% based on the weight of the principal resinous ingredient (A).

When the content is less than 1%, the resultant resinous composition exhibits an undesirably poor elongation and impact strength. Also, when the content is more than 60%, the resultant resinous composition is disadvantageous in that it has a poor mechanical strength.

The modified styrene compound copolymers (d) having terminal carboxylic anhydride groups usable for the present invention are reaction products of at least one styrene compound copolymer with at least one ethylenically unsaturated carboxylic anhydride compound.

The styrene compound copolymer is preferably selected from styrene-butadiene block copolymers, hydrogenated styrene-butadiene block copolymers and styrene-isoprene block copolymer.

The ethylenically unsaturated carboxylic anhydride compound is preferably selected from the group consisting of maleic anhydride, itaconic anhydride and citraconic anhydride. In the preparation of the modified styrene compound copolymer (d), the unsaturated carboxylic anhydride compound is reacted in an amount of 0.01% to 10%, based on the total weight of the styrene compound copolymer and the unsaturated carboxylic anhydride compound.

The modified olefin polymer (e) having terminal carboxylic anhydride groups are reaction products of at least one olefin polymer with at least one ethylenically unsaturated carboxylic anhydride compound.

The olefin copolymer is preferably selected from polymers of at least one member selected from ethylene, $\alpha$-olefins having 3 to 20 carbon atoms and dienes having 4 to 20 carbon atoms.

Specifically, the olefin polymer is selected from polyethylenes, polypropylenes, and ethylene-propylene copolymers.

The unsaturated carboxylic anhydride compounds to be reacted with the olefin polymers are the same as those mentioned above.

In the preparation of the modified olefin polymer (e), the unsaturated carboxylic anhydride compound is reacted in an amount of 0.01% to 10%, based on the total weight of the olefin polymer and the unsaturated carboxylic anhydride compound.

When the amount of the unsaturated carboxylic anhydride compound employed for the preparation of the modified styrene compound copolymer (d) or the modified olefin polymer (e) is less than 0.01% or more than 10%, the resultant modified copolymer (d) or polymer (e) exhibits an unsatisfactory improvement of the elongation and impact strength of the resultant thermoplastic resinous composition.

In a preferable embodiment, the additional resinous ingredient (B) comprises at least one modified vinyl compound copolymer (c), more preferably modified styrene compound copolymer, having terminal epoxy groups alone, in an amount of 1 to 50%, more preferably 3 to 40%, based on the weight of the principal resinous ingredient (A).

In another preferable embodiment, the additional resinous ingredient (B) comprises a mixture of 1% to 60%, based on the weight of the principal resinous ingredient (A), of at least one epoxy group-containing vinyl compound copolymer (C), more preferably epoxy group-containing styrene compound copolymer, and 1% to 80%, based on the weight of the principal resinous ingredient (A), of at least one member selected from the group consisting of the modified styrene compound copolymers (d) having terminal carboxylic

anhydride groups and modified olefin polymers (e) having terminal carboxylic anhydride groups.

In a preferable embodiment of the thermoplastic resinous composition of the present invention, the principal thermoplastic resinous ingredient (A) comprises (a) 20 to 98% by weight, preferably 30 to 95% by weight of the polyarylene sulfide resin, and (b) 2 to 80% by weight, preferably 5 to 70% by weight, of the polyphenylene ether resin; and the additional resinous ingredient (B) comprises 1 to 60%, preferably 3 to 40%, based on the weight of the principal resinous ingredient (A), of at least one styrene compound copolymer having epoxy groups.

In another preferable embodiment of the thermoplastic resinous composition of the present invention, the principal thermoplastic resinous ingredient (A) comprises (a) 20 to 98% by weight, preferably 30 to 95% by weight, of the polyarylenesulfide resin, and (b) 2 to 80% by weight, preferably 5 to 70% by weight, of the polyphenylene ether resin; and the additional resinous ingredient (B) comprises (c) 1 to 60%, preferably 3 to 40%, based on the weight of the principal thermoplastic resinous ingredient (A), of at least one styrene compound copolymer having epoxy groups, and (d) 1 to 80%, preferably 3 to 60% by weight, based on the weight of the principal thermoplastic resinous ingredient (A), of at least one member selected from the group consisting of modified styrene compound copolymers having terminal carboxylic anhydride groups and modified olefin copolymers having terminal carboxylic anhydride groups.

Those compositions are useful for producing shaped articles having an improved elongation and impact strength and a satisfactory molding workability.

In an embodiment of the thermoplastic resinous compositions, the additional resinous ingredient (B) further contains an epoxy resin-curing agent (f).

Preferably, the vinyl compound copolymers having epoxy groups are epoxy group-containing styrene compound copolymers.

The epoxy resin-curing agent usable for the present invention comprises at least one member selected from the group consisting of polyamines, for example, ethylene diamine, diethylenetriamine, triethylenetriamine, 1,3-diaminopropane, hexamethylenediamine, polyetherdiamines, isophoronediamine, diaminodicyclohexylamine, N-aminoethylpiperazine, n-xylenediamine, m-phenylenediamine and diaminodiphenylsulfone; polyaminoamides which are available under the trademarks of Tomide (Fuji Kasei K.K.), Versamidegenomide (Henkel Hakusui K.K.), and Polymide (Sanyo Kasei K.K.); carboxylic acids and carboxylic anhydrides, for example, acrylic acid, methacrylic acid, maleic acid, dodecenylsuccinic anhydride, polyadipic anhydride, polysebacic anhydride, methyltetrahydrophthalic anhydride, hexahydrophthalic anhydride, tetrahydrophthalic anhydride, methylcyclohexene dicarboxylic anhydride, phthalic anhydride, trimellitic anhydride, pyromellitic anhydride, ethyleneglycol bistrimellitate, HET anhydride (chlorendic anhydride) and tetrabromophthalic anhydride; active hydrogen-containing basic compounds, for example, dicyandiamide; imidazole compounds, for example, 2-methyl imidazole, 2-ethyl-4-methyl imidazole, and 2-phenyl imidazole; and phenolic compound-formaldehyde resins, for example, resol type phenol-formaldehyde resin.

Preferable curing agents comprise the above-mentioned polyamine compounds or acid anhydrides.

The epoxy resin-curing agent is usually employed in an amount of 0.01% to 20% based on the weight of the principal resinous ingredient (A), together with the epoxy group-containing vinyl compound copolymer, preferably epoxy group-containing styrene compound copolymer, in an amount of 1 to 60% based on the principal resinous ingredient.

Therefore, in still another preferable embodiment of the thermoplastic resinous composition of the present invention, the principal thermoplastic resinous ingredient (A) comprises (a) 20% to 98% by weight, preferably 30% to 95% by weight, of the polyarylenesulfide resin and (b) 2% to 80% by weight, preferably 5% to 70% by weight, of the polyphenylene ether resin, and the additional resinous ingredient (B) comprises (c) 1 to 60%, preferably 3% to 40% based on the weight of the principal resinous ingredients (A), of at least one styrene compound copolymer having epoxy groups, and (f) 0.01 to 20%, preferably 0.05% to 15% based on the weight of the principal resinous ingredient (A), of an epoxy resin-curing agent.

This type of composition is useful for producing shaped articles having an improved elongation and impact strength, and a satisfactory molding workability and heat resistance.

In still another embodiment of the thermoplastic resinous composition of the present invention, the polyarylenesulfide resin (a) is preliminarily modified by an addition reaction with the additional resinous ingredient (B). The modified polyarylenesulfide resin exhibits an enhanced compatibility to the polyphenyleneether resin.

Preferably, the addition reaction is carried out by constantly stirring a solution of 30 to 98% by weight, preferably 50 to 95% by weight, of the polyarylenesulfide resin and 2 to 70% by weight, preferably 5 to 50% by weight, of the additional resinous ingredient (B), preferably, the styrene compound copolymer having epoxy groups (c), in a solvent consisting of, for example, α-chloronaphthalene or N-methyl-2-pyrrolidone, at a temperature of 200 °C or more, preferably from 280 °C to 380 °C, and washing the

resultant reaction product with acetone or chloroform to remove the non-reacted compounds.

The non-reacted, epoxy group-containing styrene compound copolymer remained in the reaction product causes the resultant reaction product to exhibit an unsatisfactory compatibility to the polyphenyleneether resin (b). When, however, the addition reaction is carried out at a temperature of 280°C to 380°C for 10 minutes or more, the entire amounts of the epoxy group-containing styrene compound copolymer can completely react with the polyarylenesulfide resin.

The modified polyarylenesulfide resin is mixed in an amount of 30% to 98% by weight, preferably 40% to 98% by weight, still more preferably 50 to 95% by weight, with the polyphenyleneether resin (b) in an amount of 2 to 70% by weight, preferably 2 to 60% by weight, more preferably 5 to 50 molar%.

The above-mentioned type of composition exhibits a proper viscosity or mobility and a satisfactory molding workability.

Usually, when the non-modified polyarylenesulfide resin and the polyphenyleneether resin are melt-kneaded, the polyphenyleneether resin are dispersed in the form of small particles, in a matrix consisting of the polyarylenesulfide resin, but due to a poor compatibility of the polyarylenesulfide resin with the polyphenylene ether resin, the dispersed particles of the polyphenyleneether resin have a relatively large average size of 4 µm or more. Therefore, a mixture of the non-modified polyarylenesulfide resin and the polyphenyleneether resin exhibits a poorer elongation and impact strength than those of the non-modified polyarylene sulfide resin itself. Nevertheless, when a mixture of the above-mentioned modified polyarylenesulfide resin and the polyphenyleneether resin is melt-kneaded, the polyphenyleneether resin can be dispersed in a very small average size of 2µm or less, particularly 1 µm or less, in the modified polyarylenesulfide resin, and thus the resultant mixture exhibits a larger elongation and a higher impact strength than those of the non-modified polyarylenesulfide resin.

In still another embodiment of the thermoplastic resinous composition of the present invention, the principal thermoplastic resinous ingredient (A) is preliminarily modified with the additional resinous ingredient (A) in a weight ratio of 40:60 to 98:2, preferably, 60:40 to 95:5.

Preferably, the principal thermoplastic resinous ingredient (A) comprises the polyarylenesulfide resin alone and the additional resinous ingredient (B) comprises a modified vinyl compound copolymers having terminal epoxy groups.

The epoxy group-containing vinyl compound copolymer is an addition reaction product of a vinyl compound copolymer with an ethylenically unsaturated aliphatic glycidyl compound, for example, of the formula: (III) or (IV).

The epoxy group-containing vinyl compound copolymer preferably has a number average molecular weight of 3,000 to 120,000, more preferably, 5,000 to 50,000, and an epoxy group concentration of $1.7 \times 10^{-4}$ to $20 \times 10^{-4}$ mole/g, preferably $2.5 \times 10^{-4}$ to $17 \times 10^{-4}$ mole/g.

If the epoxy group concentration is less than $1.7 \times 10^{-4}$ mole/g, the epoxy group-containing vinyl compound copolymer exhibits an unsatisfactory poor reaction rate with the polyarylenesulfide resin. Also, a larger epoxy group concentration than $20 \times 10^{-4}$ mole/g causes the resultant reaction product to be undesirably cross-linked and to exhibit an undesirably high melt viscosity and a poor molding workability.

The modified polyarylenesulfide resin can be produced in the same manner as mentioned above, except that the polyarylenesulfide resin and the modified vinyl compound copolymer having terminal epoxy groups are employed in a weight ratio of 40:60 to 98:2, more preferably 60:40 to 95:2.

Generally, the polyarylenesulfide resin has a very poor compatibility with the modified vinyl compound copolymers. Therefore, when melt is kneaded at a high temperature, the epoxy group-containing vinyl compound copolymer is dispersed in the form of coarse particles having a relatively large average size of 5 to 6 µm in a matrix consisting of the polyarylenesulfide resin. Therefore, the melt-kneaded product exhibits poorer mechanical properties, thermal properties and molding workability than those of the polyarylenesulfide resin alone.

In the modified polyarylenesulfide resin, the epoxy group-containing vinyl compound copolymer is in the form of fine particles having an average size of 3 µm or less, particularly 1 µm or less, and thus the modified polyarylenesulfide resin exhibits satisfactory mechanical properties, thermal properties and moulding-workability, even without adding the polyphenyleneether resin.

The thermoplastic resinous composition of the present invention can be mixed with other thermoplastic elastomer in an amount of 1 to 60%, preferably 3 to 40%, based on the weight of the composition of the present invention, the greater the enhancement of the impact strength.

The thermoplastic elastomer can be selected from conventional styrene elastomers, olefin elastomers, urethane elastomers, polyester elastomers, polyamide elastomer, vinyl chloride elastomers, chlorinated polyethylene elastomers, 1,2-polybutadiene elastomers, fluorine-containing elastomers, and ionomers and elastomers thereof having carboxylic anhydride groups or epoxy groups.

The styrene elastomers include styrene-butadiene-styrene block copolymers, styrene-isoprene-styrene block copolymers, styrene-ethylene-butylene-styrene block copolymers, and maleic anhydride modification products of the above-mentioned copolymers. The styrene elastomers are available under the trademarks Cariflex TR (Shell Co.), Toughprene (Asahi Kasei), Toughtex (Asahi Kasei), JSR TR (Nihon Synthetic Rubber), Kraton G (Shell), and Sumitomo TPE-SB series (Sumitomo Kagaku).

The olefin elastomers are available under the trademarks Milastomer (Mitsui Sekiyu Kagaku Kogyo), Sumitomo TPE (Sumitomo Kagaku), Thermolane (Nihon Synthetic Rubber), Santoprene (Monsanto), and Levaflex EP (Bayer).

The polyester elastomers are available under the trademarks Hytrel (Toray-Du Pont Co.) and Perprene (Toyobo).

The polyamide elastomers are available under the trademarks Grilax (Dainihon Ink), Novamit (Mitsubishi Kasei), and Diamide-PAE (Daicel•Huls Co.).

The vinyl chloride elastomers are available under the trademarks Sumiflex (Sumitomo-Bakelite), Santoprene (Mitsubishi-Monsanto) and Aronelasto (Toa Gosei Kagaku).

The 1,2-polybutadiene elastomers are available under the trademark JSR RB (Nihon synthetic Rubber).

The fluorine-containing elastomers are available under the trademark Daiel TPE (Daikin Kogyo).

The ionomers are available under the trademark Surlyn (Du Pont).

In practical use, a reinforcing material or a filler can be added to the thermoplastic resinous composition unless the added material will result in a deterioration of the molding-workability and the physical and chemical properties of the composition.

The reinforcing material and filler include glass fibers, asbestos fibers, carbon fibers, silica fibers, silica-alumina fibers, alumina fibers, zirconia fibers, boron nitride fibers, silicon nitride fibers, boron fibers, metallic fibers, for example, stainless steel, aluminum, titanium, copper, brass and magnesium fibers, organic polymeric fibers, for example, polyamide, fluorine-containing polymer, polyester, and acrylic polymer fibers, metallic particles, for example, copper, iron, nickel, zinc, tin, lead, stainless steel, aluminum, gold and silver particles, humid silica, aluminum silicate, glass heads, carbon black, quartz powder, talc, titanium dioxide, iron oxides, calcium carbonate, and diatomaceous earth. Preferably, the fiber-shaped materials have an average thickness (diameter) of 0.1 to 50 $\mu m$ and an average length of 50 $\mu m$ to 60 mm. The reinforcing materials and fillers may be surface-treated with a conventional silane-coupling agent or titanate type-coupling agent.

Usually, the reinforcing materials and fillers are employed in an amount of 1 to 300 parts by weight, preferably 10 to 250 parts by weight, per 100 parts by weight of the thermoplastic resinous composition of the present invention.

The reinforcing materials and fillers can be employed alone or as a combination of two or more thereof.

Also, to the thermoplastic resinous composition of the present invention can be added at least one member selected from antioxidants and thermal stabilizers, for example, hindered phenol, hydroquinone, thioether, phosphites and substitution derivatives thereof and copper compounds, for example, copper iodide; ultra-violet ray-absorbing agents, for example, resorcinol, salicylates, benzotriazole, and benzophenone; parting agents, for example, stearic acid and salts thereof and stearyl alcohol; flame retardants, for example, halogen type, phosphate type, melamine-type and cyanuric acid type flame retardant; auxiliary flame retardants; anti-static agents, for example, sodium dodecylbenzenesulfonate and polyalkylete glycols; crystallization-promoting agents; dyes and pigments.

Further, to the thermoplastic resinous composition of the present invention can be added a small amount of at least one member selected from other thermoplastic resins, for example, polyethylenes, polypropylenes, ethylene-vinyl acetate copolymers, ethylene-propylene copolymers, styrene-butadiene-copolymers, hydrogenated styrene-butadiene copolymers, polyamides, polyesters, polyester elastomers, polyacetal resins, thermoplastic polyurethanes, polycarbonates, and polysulfone resins; and thermosetting resins, for example, phenol resins, melamine resins, silicone resins and epoxy resins.

The thermoplastic resinous composition can be pelletized by using an extruder, Banbury type mixer or kneader and converted to various shaped articles by an injection molding method, compression molding method or extrusion molding method.

## EXAMPLES

The present invention will be further illustrated by way of specific examples, which are merely representative and do not restrict the scope of the present invention in any way.

In the examples, the following tests were carried out.

(1) Tensile strength ($kgf/cm^2$) and ultimate elongation (%) test

Measured in accordance with ASTM D638.

(2) Impact strength (kgf•cm/cm) test (Izod impact strength test (notched))

Measured in accordance with ASTM D256. The thickness of the test piece was 1/8 inch.

(3) Thermal deformation temperature (°C) test

Measured in accordance with ASTM D648 under a load of 18.6 $kg/cm^2$.

(4) Measurement of average size of dispersed particles.

A test piece having a thickness of 2.5 mm was cooled by liquid nitrogen and broken and the average size of the dispersed particles in the test piece was determined from a scanning electron microscopic [SEM] photograph of the broken face of the test piece.

Production Example 1

(Preparation of polyphenyleneether resin (E-1))

A reaction vessel equipped with a device for introducing oxygen gas, a cooling coil and a stirrer, was filled with nitrogen gas and charged with 32.2 g of copper (II) bromide, 666 g of di-n-butylamine, and a solution of 5.25 kg of 6-xylenol in 24 ℓ of toluene. The charged materials were evenly mixed and converted to a uniform solution. The solution in the reaction vessel was maintained at a temperature of 30°C for 90 minutes, while vigorously blowing oxygen gas into the solution, to polymerize 2,6-xylenole. Thereafter, 18 ℓ of toluene and then a 20% ethylenediamine tetraacetic acid aqueous solution were added to the polymerization system to stop the polymerization reaction, and the resultant polymerization mixture was subjected to a centrifugal separation. A solution phase of the resultant polymer was collected and methyl alcohol gradually added thereto while stirring. The resultant deposited polymer was filtered and dried.

The resultant polyphenyleneether resin (E-1) had a limiting viscosity number of 0.50.

Production Example 2

(Preparation of epoxy group-containing styrene copolymer (c-1))

A separable flask equipped with a stirrer was charged with 216 g of styrene, 24 g of glycidyl methacrylate, 160 g of toluene, and 2 g of azo-bisirobutylonitrile, and the charged materials were evenly mixed at a temperature of 25°C for 20 minutes while blowing nitrogen gas into the flask. Then, the separable flask was placed in an oil bath at a temperature of 85°C, the reaction mixture was stirred at the above-mentioned temperature in the nitrogen gas atmosphere for 60 minutes, the temperature of the oil bath was then raised to 105°C, and the reaction mixture in the flask was stirred at the above-mentioned temperature for 45 minutes.

The flask was taken up from the oil bath and cooled, and the resultant reaction mixture was added dropwise to methyl alcohol while vigorously stirring. The resultant deposited product was separated and dried. The product was an epoxy group-containing styrene copolymer (c-1).

The epoxy group-containing styrene copolymer (c-1) has a number average molecular weight of about 21,300 determined by a GPC measurement and an epoxy group concentration of $6.8 \times 10^{-4}$ mole/g determined by a titration method.

Production Example 3

(Preparation of epoxy group-containing styrene copolymer (c-2))

The same procedures as in Production Example 2 were carried out except that the styrene was employed in an amount of 192 g and the glycidyl methacrylate was replaced by 48 g of glycidyl acrylate.

The resultant epoxy group-containing styrene copolymer (c-2) had a number average molecular weight of about 12,000 and an epoxy group concentration of $13.1 \times 10^{-4}$ mole/g.

Production Example 4

(Preparation of epoxy group-containing styrene copolymer (c-3))

The same procedures as in Production Example 2 were carried out except that the styrene was employed in an amount of 234 g and the glycidyl methacrylate was used in an amount of 6 g.

The resultant epoxy group-containing styrene copolymer (c-3) had a number average molecular weight of approximately 42,000 and an epoxy group concentration of 1.7 x $10^{-4}$ mole/g.

Production Example 5

(Preparation of epoxy group-containing styrene copolymer (c-4))

The same procedures as in Production Example 2 were carried out except that the azobisisobutylonitril was used in an amount of 1 g.

The resultant epoxy group-containing styrene copolymer (c-4) had a number average molecular weight of 11,600 and an epoxy group concentration of 6.86 x $10^{-4}$ mole/g.

Production Example 6

(Preparation of epoxy group-containing styrene copolymer (c-5))

The same procedures as those described in Production Example 2 were carried out except that the styrene was used in an amount of 228 g and the glycidyl methacrylate was employed in an amount of 12 g.

The resultant epoxy group-containing styrene copolymer (c-5) had a number average molecular weight of 52,900 and an epoxy group concentration of 3.45 x $10^{-4}$ mole/g.

Production Example 7

(Preparation of epoxy group-containing styrene-methyl methacrylate copolymer (c-6))

The same procedures as those described in Production Example 2 were carried out except that 216 g of styrene were replaced by 210 g of styrene and 7 g of methyl methacrylate.

The resultant epoxy group-containing styrene-methyl methacrylate copolymer (c-6) had a number average molecular weight of 12,600 and an epoxy group concentration of 6.6 x $10^{-4}$ mole/g.

Production Example 8

(Preparation of modified Olefin polymer (F-1) having terminal carboxylic anhydride groups)

A mixture of 100 parts by weight of an ethylenepropylene copolymer, which was a polymerization product of 85% by weight of ethylene and 15% by weight of propylene, 15 parts by weight of maleic anhydride and a small amount of di-tert-butyl peroxide, was knead-mixed by a monoaxial kneader at a temperature of 200 °C to prepare a maleic ahhydride-modified olefine polymer having a melt index of 0.5 g/10 min determined at a temperature of 230 °C under a load of 2,160 g.

Production Example 9

(Preparation of addition reaction product (D-1) to (D-5) of polyacrylenesulfide resin with epoxy group-containing styrene copolymer)

A polyphenylenesulfide resin (available under a trademark of Topren T-4) in an amount of 90 parts by weight was melted at a temperature of 300°C and mixed with the epoxy group-containing styrene copolymer (C-4) described in production Example 5 in an amount of 10 parts by weight.

The mixture was kneaded in a Brabender type kneader in a nitrogen gas atmosphere for 20 minutes to ensure the reaction with the polyphenylenesulfide resin with the epoxy group-containing styrene copolymer (C-4).

The resultant product was cooled, pulverized, washed with acetone to remove non-reacted copolymer (C-4), and then dried.

The resultant modified resin had a melting point (PSC peak point) of 281°C, a melt viscosity of 8,800 poises determined by Capilograph 2B (trademark, Toyoseiki Seisakusho) at a temperature of 300°C and a shearing rate of 120 sec, and a content of non-reacted components of approximately 0.1% by weight.

The same procedures as those mentioned above were repeated four times, except that the amount of the polyphenylenesulfide resin, and the amount and type of the epoxy group-containing styrene copolymer were changed to as indicated in Table 1.

The melting points and melt viscosities of the resultant modified polyphenylenesulfide resins (D-2, D-3, D-4, and D-5) were as indicated in Table 1.

Table 1.

| Item / Resin | Amount of PPS resin (wt part) | Epoxy-containing styrene copolymer: Type | Epoxy-containing styrene copolymer: Amount (wt part) | Modified PPS resin: Melting point (°C) | Modified PPS resin: Melt viscosity (poise) |
|---|---|---|---|---|---|
| PPS | 100 | - | 0 | 295 | 5,600 |
| D-1 | 90 | C-4 | 10 | 281 | 8,800 |
| D-2 | 95 | C-4 | 5 | 280 | 10,000 |
| D-3 | 80 | C-5 | 20 | 281 | 3,500 |
| D-4 | 90 | C-2 | 10 | 283 | 23,000 |
| D-5 | 90 | C-6 | 10 | 282 | 8,900 |

Examples 1 to 3 and Comparative Example 1 to 5

In each of Examples 1 to 3 and Comparative Examples 1 to 5, a polyarylenesulfide resin (available under the trademark Topren T-4, from Topren Co.), the polyphenyleneether resin (E-1) of Production Example 1, and the epoxy group-containing styrene copolymer (C-1) were mixed in the composition indicated in Table 2.

The resultant composition was melt-kneaded by a biaxial kneader having a screw diameter of 30 mm, at a temperature of 320°C, and pelletized,

The resultant resin pellets were injection-molded at a molding temperature of 320°C and a mold temperature of 130°C to provide shaped test pieces.

The test results are shown in Table 2.

Table 2

| Item | Example No. | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| Composition (wt part) | PPS (Topren T-4) | 60 | 80 | 30 | 100 | 60 | 60 | 60 | 60 |
| | PPE (E-1) | 40 | 20 | 70 | 0 | 40 | 40 | 40 | 40 |
| | Epoxy-containing styrene copolymer (C-1) | 10 | 10 | 10 | 0 | 0 | 0 | 55 | 0 |
| | Styrene-ethylene-glysidyl methacrylate copolymer *1 | 0 | 0 | 0 | 0 | 0 | 10 | 0 | 0 |
| | Bisphenol A type epoxy resin *2 | 0 | 0 | 0 | 0 | 0 | 0 | 0 | 10 |
| Shaped article | Tensile strength ($kgf/cm^2$) | 678 | 702 | 675 | 740 | 460 | 480 | 370 | 475 |
| | Ultimate elongation (%) | 5.8 | 5.4 | 8.6 | 1.7 | 1.4 | 1.6 | 1.0 | 1.1 |
| | Impact strength (kgf·cm/cm) | 3.3 | 2.8 | 3.9 | 1.3 | 0.7 | 1.2 | 0.7 | 0.8 |
| | Thermal deforming temperature (°C) | 130 | 116 | 164 | 108 | 121 | 122 | 99 | 125 |
| | Average size of dispersed particles (μm) | 0.5 | 0.6 | 0.6 | - | 4.1 | 3.4 | 3.1 | 3.3 |

Note
*1 ... Trademark: Modiper A4100, Nihon Yushi K.K.
*2 ... Trademark: Epicron 3050, Dainippon Ink Kagaku Kogyo K.K.

Example 4 to 8

In each of Examples 4 to 8, the same procedures as described in Example 1 were carried out except that two different types of polyarylenesulfide resins (available under trademarks Topren T-4 and Topren T-1, from Topren Co.), the polyphenyleneether resin (E-1), two different epoxy group-containing styrene copolymers (C-2) and (C-3), glass fibers (available under a trademark CSO3-MA-411, from Asahi Eiker Glass Co.) and calcium carbonate (available under a trademark Whiton S0, from Shiraishi Calcium Co.) were mixed in the composition as indicated in Table 3.

The test results are shown in Table 3.

Table 3

| Item | Example No. | Example 4 | 5 | 6 | 7 | 8 |
|---|---|---|---|---|---|---|
| Composition (wt part) | PPS (Topren T-4) | 60 | 80 | 80 | 80 | 80 |
| | (Topren T-1) | 10 | 0 | 0 | 0 | 0 |
| | PPE (E-1) | 30 | 20 | 20 | 20 | 20 |
| | Epoxy-containing styrene copolymer (C-2) | 5 | 5 | 0 | 5 | 5 |
| | (C-3) | 0 | 0 | 40 | 0 | 0 |
| | Glass fibers | 0 | 0 | 0 | 60 | 60 |
| | Calcium carbonate | 0 | 0 | 0 | 0 | 40 |
| Shaped article | Tensile strength ($kgf/cm^2$) | 701 | 678 | 683 | 1620 | 1340 |
| | Ultimate elongation (%) | 6.3 | 5.9 | 8.3 | 3.3 | 2.4 |
| | Impact strength (kgf·cm/cm) | 3.2 | 2.9 | 3.4 | 12.7 | 10.7 |
| | Thermal deforming temperature (°C) | 136 | 117 | 112 | 271 | 270 |
| | Average size of dispersed particle (μm) | 0.4 | 0.6 | 0.5 | - | - |

Examples 9 to 11 and Comparative Examples 6 to 10

In each of Examples 9 to 11 and Comparative Examples 6 to 10, the same procedures as in Example 1 were carried out except that the polyarylenesulfide resin (Topren T-4), the PPE resin (E-1), the epoxy group-containing styrene copolymer (C-1) and a maleic anhydride-modified hydrogenated styrene-butadiene-styrene block copolymer and having carboxylic anhydride groups (available under the trademark Toughtec M1913, from Asahi Kasei Kogyo K.K.) were mixed in the composi tion indicated in Table 4.

The results of the tests thereof are shown in Table 4.

Table 4

| Item | Example No. | Example 9 | Example 10 | Example 11 | Comparative Example 6 | Comparative Example 7 | Comparative Example 8 | Comparative Example 9 | Comparative Example 10 |
|---|---|---|---|---|---|---|---|---|---|
| Composition (wt part) | PPS (Topren T-4) | 60 | 80 | 30 | 60 | 60 | 60 | 60 | 60 |
| | PPE (E-1) | 40 | 20 | 70 | 40 | 40 | 40 | 40 | 40 |
| | Epoxy-containing styrene copolymer (C-1) | 10 | 10 | 10 | 0 | 10 | 0 | 0 | 65 |
| | Bisphenol A type epoxy resin $(*)_2$ | 0 | 0 | 0 | 0 | 0 | 0 | 10 | 0 |
| | Modified styrene copolymer with calboxylic anhydride groups | 10 | 10 | 10 | 0 | 0 | 10 | 10 | 10 |
| Shaped article | Tensile strength ($kgf/cm^2$) | 670 | 723 | 695 | 460 | 678 | 423 | 445 | 341 |
| | Ultimate elongation (%) | 10.8 | 9.3 | 13.2 | 1.4 | 5.8 | 3.1 | 1.9 | 1.5 |
| | Impact strength (kgf·cm/cm) | 8.6 | 5.2 | 8.9 | 0.7 | 3.0 | 2.1 | 1.7 | 1.2 |
| | Thermal deforming temperature (°C) | 127 | 122 | 162 | 121 | 130 | 108 | 115 | 96 |
| | Average size of dispersed particles (μm) | 0.4 | 0.5 | 0.5 | 4.1 | 0.5 | 4.1 | 3.7 | 3.2 |

Note: $(*)_2$ ..... Epicron 3050

Examples 12 to 17

In each of Example 12 to 17, the same procedures as those described in Example 4 were carried out except that the polyphenylenesulfide resins (Topren T-4 and T-1), the PPE resin (E-1), the epoxy group containing styrene copolymers (C-1), (C-2) and (C-3), the modified styrene copolymer having terminal carboxylic anhydride groups as indicated in Table 5, the modified olefin polymer (F-1) having terminal carboxylic anhydride groups, the glass fibers (Cs-03-MA-411) and the calcium carbonate (Whiton SO) were mixed in the composition as shown in Table 5.

The test results are shown in Table 5.

Table 6

| Item | Example No. | Example 18 | Example 19 | Example 20 | Comparative Example 11 | Comparative Example 12 | Comparative Example 13 | Comparative Example 14 | Comparative Example 15 | Comparative Example 16 |
|---|---|---|---|---|---|---|---|---|---|---|
| Composition (wt part) | PPS (Topren T-4) | 60 | 80 | 30 | 100 | 60 | 60 | 60 | 60 | 60 |
| | PPE (E-1) | 40 | 20 | 70 | 0 | 40 | 40 | 40 | 40 | 40 |
| | Epoxy-containing styrene copolymer (C-1) | 10 | 10 | 10 | 0 | 0 | 10 | 0 | 65 | 0 |
| | Styrene-ethylene-glycidyl methacrylate copolymer $(*)_1$ | 0 | 0 | 0 | 0 | 0 | 0 | 10 | 0 | 0 |
| | Bisphenol A type epoxy resin $(*)_2$ | 0 | 0 | 0 | 0 | 0 | 0 | 0 | 0 | 10 |
| | PMDA | 0.7 | 0.4 | 1.0 | 0 | 0 | 0 | 0.7 | 0.7 | 0 |
| Shaped article | Tensile strength ($kgf/cm^2$) | 730 | 750 | 705 | 740 | 460 | 678 | 480 | 353 | 475 |
| | Ultimate elongation (%) | 7.8 | 6.7 | 10.5 | 1.7 | 1.4 | 5.8 | 1.6 | 0.9 | 1.1 |
| | Impact strength (kgf·cm/cm) | 4.2 | 3.6 | 4.3 | 1.3 | 0.7 | 3.3 | 1.2 | 0.8 | 0.8 |
| | Thermal deforming temperature (°C) | 136 | 118 | 172 | 108 | 121 | 130 | 122 | 97 | 125 |
| | Average size of dispersed particles (μm) | 0.5 | 0.6 | 0.6 | - | 4.1 | 0.5 | 3.4 | 3.1 | 3.3 |

Note: $(*)_1$ ..... Modiper A4100

$(*)_2$ ..... Epicron 3050

Table 6

| Item | Example No. | Example 18 | Example 19 | Example 20 | Comparative Example 11 | Comparative Example 12 | Comparative Example 13 | Comparative Example 14 | Comparative Example 15 | Comparative Example 16 |
|---|---|---|---|---|---|---|---|---|---|---|
| Composition (wt part) | PPS (Topren T-4) | 60 | 80 | 30 | 100 | 60 | 60 | 60 | 60 | 60 |
| | PPE (E-1) | 40 | 20 | 70 | 0 | 40 | 40 | 40 | 40 | 40 |
| | Epoxy-containing styrene copolymer (C-1) | 10 | 10 | 10 | 0 | 0 | 10 | 0 | 65 | 0 |
| | Styrene-ethylene-glycidyl methacrylate copolymer $(*)_1$ | 0 | 0 | 0 | 0 | 0 | 0 | 10 | 0 | 0 |
| | Bisphenol A type epoxy resin $(*)_2$ | 0 | 0 | 0 | 0 | 0 | 0 | 0 | 0 | 10 |
| | PMDA | 0.7 | 0.4 | 1.0 | 0 | 0 | 0 | 0.7 | 0.7 | 0 |
| Shaped article | Tensile strength ($kgf/cm^2$) | 730 | 750 | 705 | 740 | 460 | 678 | 480 | 353 | 475 |
| | Ultimate elongation (%) | 7.8 | 6.7 | 10.5 | 1.7 | 1.4 | 5.8 | 1.6 | 0.9 | 1.1 |
| | Impact strength (kgf·cm/cm) | 4.2 | 3.6 | 4.3 | 1.3 | 0.7 | 3.3 | 1.2 | 0.8 | 0.8 |
| | Thermal deforming temperature (°C) | 136 | 118 | 172 | 108 | 121 | 130 | 122 | 97 | 125 |
| | Average size of dispersed particles (μm) | 0.5 | 0.6 | 0.6 | - | 4.1 | 0.5 | 3.4 | 3.1 | 3.3 |

Note: $(*)_1$ ..... Modiper A4100

$(*)_2$ ..... Epicron 3050

Table 6

| Item | Example No. | Example | | | Comparative Example | | | | | |
|---|---|---|---|---|---|---|---|---|---|---|
| | | 18 | 19 | 20 | 11 | 12 | 13 | 14 | 15 | 16 |
| Composition (wt part) | PPS (Topren T-4) | 60 | 80 | 30 | 100 | 60 | 60 | 60 | 60 | 60 |
| | PPE (E-1) | 40 | 20 | 70 | 0 | 40 | 40 | 40 | 40 | 40 |
| | Epoxy-containing styrene copolymer (C-1) | 10 | 10 | 10 | 0 | 0 | 10 | 0 | 65 | 0 |
| | Styrene-ethylene-glycidyl methacrylate copolymer $(*)_1$ | 0 | 0 | 0 | 0 | 0 | 0 | 10 | 0 | 0 |
| | Bisphenol A type epoxy resin $(*)_2$ | 0 | 0 | 0 | 0 | 0 | 0 | 0 | 0 | 10 |
| | PMDA | 0.7 | 0.4 | 1.0 | 0 | 0 | 0 | 0.7 | 0.7 | 0 |
| Shaped article | Tensile strength ($kgf/cm^2$) | 730 | 750 | 705 | 740 | 460 | 678 | 480 | 353 | 475 |
| | Ultimate elongation (%) | 7.8 | 6.7 | 10.5 | 1.7 | 1.4 | 5.8 | 1.6 | 0.9 | 1.1 |
| | Impact strength (kgf·cm/cm) | 4.2 | 3.6 | 4.3 | 1.3 | 0.7 | 3.3 | 1.2 | 0.8 | 0.8 |
| | Thermal deforming temperature (°C) | 136 | 118 | 172 | 108 | 121 | 130 | 122 | 97 | 125 |
| | Average size of dispersed particles (μm) | 0.5 | 0.6 | 0.6 | - | 4.1 | 0.5 | 3.4 | 3.1 | 3.3 |

Note: $(*)_1$ ..... Modiper A4100

$(*)_2$ ..... Epicron 3050

Examples 21 to 26

In each of Examples 21 to 26, the same procedures as those in Example 4 were carried out except that the polyarylenesulfide resins (Topren T-4 and T-1), the polyphenyleneether resin (E-1), the epoxy group-containing styrene copolymers (C-2) and (C-3), PMDA, an epoxy resin-curing agent as shown in Table 7, the thermoplastic polyester elastomer, the glass fibers, and the calcium carbonate were mixed in the composition as indicated in Table 7.

The test results are shown in Table 7.

Table 7

| Item | Example No. | Example 21 | 22 | 23 | 24 | 25 | 26 |
| --- | --- | --- | --- | --- | --- | --- | --- |
| Composition (wt part) | PPS (Topren T-4) | 60 | 80 | 80 | 80 | 80 | 80 |
| | (Topren T-1) | 10 | 0 | 0 | 0 | 0 | 0 |
| | PPE (E-1) | 30 | 20 | 20 | 40 | 20 | 20 |
| | Epoxy-containing styrene copolymer (C-2) | 5 | 5 | 0 | 5 | 5 | 5 |
| | Epoxy-containing styrene copolymer (C-3) | 0 | 0 | 40 | 0 | 0 | 0 |
| | PMDE | 0.7 | 0 | 1.0 | 0.5 | 0.7 | 1.0 |
| | Amine type epoxy resin-curing agent (*)$_5$ | 0 | 12.4 | 0 | 0 | 0 | 0 |
| | Thermoplastic elastomer (*)$_4$ | 0 | 0 | 0 | 10 | 0 | 0 |
| | | 0 | 0 | 0 | 0 | 60 | 60 |
| | | 0 | 0 | 0 | 0 | 0 | 40 |
| Shaped article | Tensile strength ($kgf/cm^2$) | 734 | 702 | 668 | 690 | 1670 | 1370 |
| | Ultimate elongation (%) | 9.1 | 13.3 | 14.1 | 16.1 | 3.6 | 2.5 |
| | Impact strength (kgf·cm/cm) | 3.8 | 5.1 | 5.2 | 5.3 | 13.8 | 11.4 |
| | Thermal deforming temperature (°C) | 139 | 115 | 110 | 131 | 273 | 270 |
| | Average size of dispersed particles (μm) | 0.4 | 0.6 | 0.5 | 0.4 | - | - |

Examples 27 and 28 and Comparative Examples 17 to 21

In each of Examples 27 and 28, the modified polyarylenesulfide resin (D-1) having epoxy groups described in Production Example 9, and the polyphenyleneether resin (E-1) described in Production Example 1 were mixed in the composition as shown in Table 8.

The mixture was melt-kneaded by a biaxial kneader having a screw diameter of 30 mm and pelletized. The resultant pellets were injection-molded at a molding temperature of 300 °C and a mold temperature of 145 °C to provide test pieces.

In each of Comparative Examples 17 to 21, the same procedures as in Example 27 were carried out, with the following exceptions.

In Comparative Example 17, the above-mentioned mixture was replaced by a non-modified polyarylenesulfide resin (Topren T-4).

In Comparative Example 18, the non-modified polyarylenesulfide resin (Topren T-4) and the polyphenyleneether resin (E-1) were mixed in the composition as shown in Table 8.

In Comparative Example 19, the non-modified polyarylenesulfide resin (Topren T-4) and a styrene polymer-grafted modified polyphenyleneether resin, which was produced in accordance with Japanese Unexamined Patent Publication No. 50-51197, were mixed in the composition as shown in Table 8.

In each of Comparative Examples 20 and 21, the non-modified polyarylenesulfide resin (Topren T-4), and a styrene-ethylene-glycidyl methacrylate copolymer (available under the trademark Modiper A4100, from Nihon Yushi K.K.) or a bisphenol A type epoxy resin (available under the trademark Epicron 3050, from Dainihon Ink Kagaku Kogyo K.K.) were mixed in the composition as shown in Table 8.

The results of the tests are shown in Table 8.

Table 8

| Item | Example No. | Example 27 | Example 28 | Comparative Example 17 | Comparative Example 18 | Comparative Example 19 | Comparative Example 20 | Comparative Example 21 |
|---|---|---|---|---|---|---|---|---|
| Composition (wt part) | Modified PPS (D-1) | 60 | 80 | - | - | - | - | - |
| | PPE (E-1) | 40 | 20 | - | 40 | - | 40 | 40 |
| | Non-modified PPS | - | - | 100 | 60 | 60 | 50 | 55 |
| | Styrene polymer-grafted PPE | - | - | - | - | 40 | - | - |
| | Styrene-ethylene-glycidyl methacrylate copolymer | - | - | - | - | - | 10 | - |
| | Bisphenol A type epoxy resin | - | - | - | - | - | - | 5 |
| Shaped article | Tensile strength ($kgf/cm^2$) | 698 | 712 | 740 | 460 | 480 | 480 | 470 |
| | Ultimate elongation (%) | 6.8 | 5.4 | 1.7 | 1.4 | 1.0 | 1.6 | 1.0 |
| | Impact strength (notched) (kgf·cm/cm) | 3.5 | 2.8 | 1.3 | 0.7 | 0.9 | 1.2 | 0.8 |
| | Impact strength (non-notched) (kgf·cm/cm) | 51 | 48 | 43 | 25 | 28 | 26 | 28 |
| | Average size of dispersed particles (μm) | 0.4 | 0.5 | - | 4.1 | 6.3 | 3.4 | 2.8 |

Examples 29 to 35

In each of Examples 29 to 35, the same procedures as those described in Example 27 were carried out except that the modified polyarylenesulfide resins (D-1), (D-2), (D-3), (D-4) and (D-5), the polyphenyleneether resin (E-1), the non-modified polyarylenesulfide resin (Topren T-1), thermoplastic elastomers (maleic anhydride-modified styrene-ethylene-butylene-styrene block copolymers, available under the trademarks Toughtec M1913 and H1041, from Asahi Kasei) and glass fibers (CS-03-MA-411) were mixed in the composition as indicated in Table 9.

The test results are shown in Table 9.

Table 9

| Item | | | Example No. 29 | 30 | 31 | 32 | 33 | 34 | 35 |
|---|---|---|---|---|---|---|---|---|---|
| Composition (wt part) | Modified PPS | D-1 | | | | | 40 | 64 | 49 |
| | | D-2 | 70 | | | | | | |
| | | D-3 | | 60 | | | | | |
| | | D-4 | | | 80 | | | | |
| | | D-5 | | | | 60 | | | |
| | PPE | | 30 | 40 | 20 | 40 | 20 | 27 | 21 |
| | Non-modified PPS (Topren T-1) | | | | | | 31 | | |
| | Maleic anhydride-modified styrene-ethylene-butylene-styrene block copolymer $(*)_5$ | M1913 | | | | | 9 | | 7 |
| | | H1041 | | | | | | 9 | |
| | Glass fiber | | | | | | | | 30 |
| Shaped article | Tensile strength ($kgf/cm^2$) | | 665 | 657 | 690 | 664 | 630 | 610 | 1,380 |
| | Ultimate elongation (%) | | 9.3 | 7.8 | 7.1 | 8.1 | 13.9 | 11.2 | 3.6 |
| | Impact strength (notched) (kgf·cm/cm) | | 3.9 | 3.6 | 3.2 | 3.4 | 14.2 | 8.4 | 14.7 |
| | Impact strength (non-notched) (kgf·cm/cm) | | 53 | 50 | 47 | 61 | 158 | 81 | 87 |
| | Average size of dispersed particles (μm) | | 0.5 | 0.4 | 0.5 | 0.5 | 0.4 | 0.4 | - |

Note: $(*)_5$ ..... Toughtec M1913, Toughtec H1041, thermoplastic elastomers having terminal carboxylic anhydride groups

Example 36

A mixture was prepared from 90 parts by weight of polyarylenesulfide resin (Topren T-4) and 10 parts by weight of the epoxy group-containing styrene copolymer (C-4), melt-kneaded by a biaxial kneader having a cylinder diameter of 30 mm at a screw rotation number of 60 rpm and a temperature of 300 °C to modify the polyarylenesulfide resin with the epoxy group-containing styrene-copolymer, and then pelletized.

The pellets were pulverized, washed with acetone to remove non-reacted epoxy group-containing styrene copolymer, and then dried.

The resultant modified polyarylenesulfide resin contained about 0.1% by weight of non-reacted components.

The modified polyarylenesulfide resin was injection molded at a cylinder temperature of 300 °C and a mold temperature of 145 °C under an injection pressure of 900 $kg/cm^2$ to provide shaped test pieces.

The injection molding operation was smoothly carried out without a formation of burrs, i.e., the modified polyarylenesulfide resin exhibited a satisfactory molding workability, and the resultant shaped articles had a good surface smoothness.

The test result are shown in Table 10.

Comparative Example 22

The same procedures as in Example 36 were carried out except that a non-modified polyarylenesulfide resin (Topren T-4) was converted to the shaped test pieces.

In the injection molding operation, the resultant shaped article had a number of burrs.

When the injection molding operation was carried out under conditions under which the formation of burrs was prevented, the resultant shaped article had a poor surface smoothness, or the resin exhibited a poor molding workability and the amount of the injection molded resin was reduced.

The test results are shown in Table 10.

Comparative Example 23

The same procedures as those in Example 36 were carried out except that the epoxy group-containing styrene copolymer (C-4) was replaced by a polystyrene having a number average molecular weight of 15,000.

The test results are shown in Table 10.

Table 10

| Item | Example No. | Example 36 | Comparative Example 21 | Comparative Example 22 |
|---|---|---|---|---|
| Composition (wt part) | PPS | 90 | 100 | 90 |
| | Epoxy-containing styrene copolymer (C-4) | 10 | - | - |
| | Polystyrene | - | - | 10 |
| Shaped article | Impact strength (kgf·cm/cm) | 2.2 | 1.3 | 0.9 |
| | Thermal deforming temperature (°C) | 108 | 108 | 97 |
| | Average size of dispersed particles (μm) | 0.1 | - | 8 |
| | Injection molding workability | Good | Bad (formation of burrs) | (Bad formation of burrs) |

Examples 37 to 40

In each of Examples 37 to 40, the same procedures as in Example 36 were carried out except that the polyarylenesulfide resin (Topren T-4), and the epoxy group-containing styrene copolymers (C-4), (C-5), (C-2) and (C-6) were mixed in the composition as indicated in Table 11.

The results of test are shown in Table 11.

Table 11

| Item | | Example No. 37 | 38 | 39 | 40 |
|---|---|---|---|---|---|
| Composition (wt part) | PPS | 95 | 80 | 90 | 90 |
| | Epoxy-containing styrene copolymer (C-4) | 5 | - | - | - |
| | (C-5) | - | 20 | - | - |
| | (C-2) | - | - | 10 | - |
| | (C-6) | - | - | - | 10 |
| Shaped article | Impact strength (kgf·cm/cm) | 1.9 | 2.1 | 2.3 | 2.2 |
| | Thermal deforming temperature (°C) | 109 | 113 | 108 | 110 |
| | Average size of dispersed particles (μm) | 0.2 | 0.1 | <0.1 | 0.1> |
| | Injection molding workability | Good | Good | Good | Good |

## Claims

1. A thermoplastic resinous composition comprising:

(A) a principal thermoplastic resinous ingredient comprising:

(a) 20 to 100% by weight of a polyarylenesulfide resin; and

(b) 0 to 80% by weight of a polyphenyleneether resin; and

(B) an additional resinous ingredient comprising (c) at least one type of vinyl compound copolymer having epoxy groups, which is a copolymerization product of at least one vinyl compound and at least one ethylenically unsaturated aliphatic glycidyl compound, in an amount of 1 to 60% based on the weight of the principal thermoplastic resinous ingredient.

2. The resinous composition as claimed in claim 1, wherein the polyarylenesulfide resin comprises at least one member selected from those having 70 to 100 molar% of p-phenylenesulfide repeating units of the formula (I):

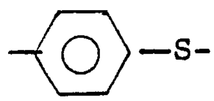

and 0 to 30 molar% of at least one type of non-*p*-phenylenesulfide type aromatic repeating units.

3. The resinous composition as claimed in claim 2, wherein the non-phenylenesulfide type repeating units are selected from the group consisting of those of the formula:

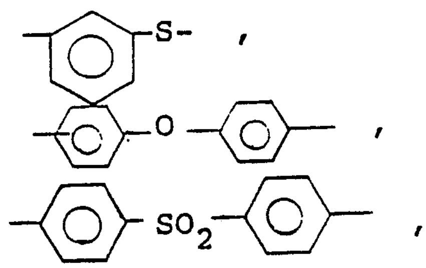

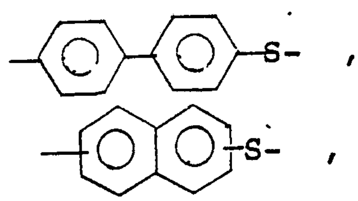

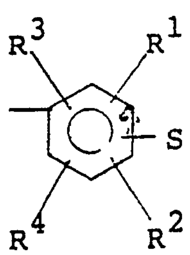

and

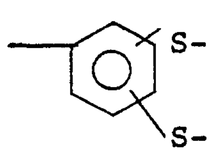

wherein $R^1$, $R^2$, $R^3$ and $R^4$ represent, respectively and independently, a member selected from the group consisting of a hydrogen atoms, alkyl radicals having 1 to 12 carbon atoms, alkoxy radicals having 1 to 12

carbon atoms, a phenyl radical and a nitro radical, at least one of $R^1$ to $R^4$ not being a hydrogen atom.

4. The resinous composition as claimed in claim 1, wherein the polyarylenesulfide resin has a melt flow rate of 5 g/10 min to 10,000 g/10 min, determined by a melt indexer in accordance with ASTM D 1238-74 T, at a temperature of 315 °C under a load of 5 kg.

5. The resinous composition as claimed in claim 1, wherein the polyphenyleneether resin comprises at least one type of *p*-phenyleneether type polymer having the repeating units of the formula (II):

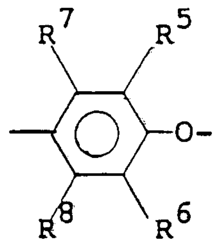

(II)

wherein $R^5$ and $R^6$ represent respectively and independently from each other, a mono-valent group selected from the group consisting of hydrocarbon groups having 1 to 8 carbon atoms, hydrocarbonoxy groups having 1 to 8 carbon atoms, halogenated hydrocarbon groups having 1 to 8 carbon atoms and halogenated hydrocarbonoxy groups having 1 to 8 carbon atoms, and $R^7$ and $R^8$ represent, respectively and independently, a member selected from the group consisting of monovalent hydrocarbon groups having 1 to 8 carbon atoms and a hydrogen atom.

6. The resinous composition as claimed in claim 1, wherein the polyphenylene-ether resin has a limiting viscosity number ($\eta$) of 0.3 to 3.0 determined in a concentration of 0.5% in a solvent consisting of chloroform at a temperature of 30 °C.

7. The resinous composition as claimed in claim 1, wherein the vinyl compound is selected from ethylene, propylene, butene-1, pentene-1, 4-methyl pentene-1, isobutylene, 1,4-hexadiene, dicyclopentadiene, 2,5-norbornadiene, 5-ethyl-2,5-norbornadiene, 5-ethylidenenorbornene, 5-(1-propenyl)-2-norbornene, butadiene, isoprene, styrene, methyl styrenes, vinylxylenes, dichloreostyrenes, bromostyrenes, dibromostyrenes, p-tert-butyl styrene, ethylstyrenes, vinyl naphthalenes, acrylonitrile, methyl acrylate, methyl methacrylate, ethyl acrylate and ethyl methacrylate.

8. The resinous composition as claimed in claim 1, wherein the ethylenically unsaturated aliphatic glycidyl compound is selected from those of the formula (III) and (IV):

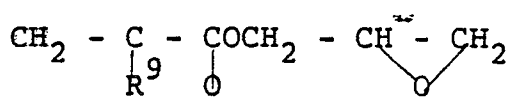

(III)

and

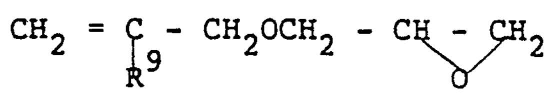

(IV)

wherein $R^9$ represents a member selected from the group consisting of a hydrogen atom and monovalent hydrocarbon groups having 1 to 8 carbon atoms.

9. The resinous composition as claimed in claim 1, wherein the vinyl compound and the ethylenically unsaturated aliphatic glycidyl compound are copolymerized in a weight ratio of 40:60 to 99.5:0.5.

10. The resinous composition as claimed in claim 8, wherein the modified vinyl compound copolymer (c) has a number average molecular weight of 3,000 to 120,000.

11. The resinous composition as claimed in claim 1, wherein the additional resinous ingredient (B) further comprises 1 to 80%, based on the weight of the principal resinous ingredient (A), of at least one member selected from the group consisting of:

(d) modified styrene compound copolymers having terminal carboxylic anhydride groups, which are reaction products of at least one styrene compound copolymer with at least one unsaturated carboxylic anhydride compound, and

(e) modified olefin polymers having terminal carboxylic anhydride groups, which are reaction products of at least one olefin polymer with at least one unsaturated carboxylic anhydride compound.

12. The resinous composition as claimed in claim 11, wherein the unsaturated carboxylic anhydride compound is selected from the group consisting of maleic anhydride, itaconic anhydride and citraconic

anhydride.

13. The resinous composition as claimed in claim 11, wherein the styrene compound copolymer is selected from the group consisting of styrene-butadiene block copolymers, hydrogenated styrene-butadiene block copolymers and styrene-isoprene block copolymers.

14. The resinous composition as claimed in claim 11, wherein the olefin polymer is selected from polymers of at least one member selected from ethylene, α-olefins having 3 to 20 carbon atoms and dienes having 4 to 20 carbon atoms.

15. The resinous composition as claimed in claim 11, wherein, in the modified styrene compound copolymer (d), the unsaturated carboxylic anhydride compound is employed in an amount of 0.01 to 10% based on the total weight of the unsaturated carboxylic anhydride compound and the styrene compound copolymer.

16. The resinous composition as claimed in claim 11, wherein, in the modified olefin polymer (e), the unsaturated carboxylic anhydride compound is employed in an amount of 0.01 to 10% based on the total amount of the unsaturated carboxylic anhydride compound and the olefin polymer.

17. The resinous composition as claimed in claim 1, wherein the additional resinous ingredient further contains 0.01% to 20%, based on the weight of the principal resinous ingredient, of an epoxy resin-curing agent.

18. The resinous composition as claimed in claim 17, wherein the epoxy resin-curing agent comprises at least one member selected from the group consisting of polyamines, polyaminoamides, carboxylic acids and anhydrides, active hydrogen-containing basic compounds, imidazole compounds and phenolic compound-formaldehyde resins.

19. The resinous composition as claimed in claim 1, wherein the principal thermoplastic resinous ingredient (A) comprises (a) 20 to 98% by weight of the polyarylene sulfide resin, and (b) 2 to 80% by weight of the polyphenylene ether resin; and the additional resinous ingredient (B) comprises 1 to 50%, based on the weight of the principal resinous ingredient (A), of at least one styrene compound copolymer having epoxy groups.

20. The resinous composition as claimed in claim 1, wherein the principal thermoplastic resinous ingredient (A) comprises (a) 20 to 98% by weight of the polyarylenesulfide resin, and (b) 2 to 80% by weight of the polyphenylene ether resin; and the additional resinous ingredient (B) comprises (c) 1 to 60%, based on the weight of the principal thermoplastic resinous ingredient (A), of at least one styrene compound copolymer having epoxy groups, and (d) 1 to 80%, based on the weight of the principal thermoplastic resinous ingredient (A), of at least one member selected from the group consisting of modified styrene compound copolymers having terminal carboxylic anhydride groups and modified olefin copolymers having terminal carboxylic anhydride groups.

21. The resinous composition as claimed in claim 1, wherein the principal thermoplastic resinous ingredient (A) comprises (a) 20 to 98% by weight of the polyarylenesulfide resin and (b) 2 to 80% by weight of the polyphenylene ether resin, and the additional resinous ingredient (B) comprises (c) 1 to 60%, based on the weight of the principal resinous ingredients (A), of at least one styrene compound copolymer having epoxy groups, and (e) 0.01 to 20%, based on the weight of the principal resinous ingredient (A), of an epoxy resin-curing agent.

22. The resinous composition as claimed in claim 1, wherein the polyarylenesulfide resin (a) is preliminarily modified by addition reaction with the additional resinous ingredient (B), and the addition reaction product is mixed in an amount of 30 to 98 parts by weight with 2 to 70 parts by weight of the polyphenyleneether resin (b).

23. The resinous composition as claimed in claim 22, wherein the additional resinous ingredient (B) comprises a styrene compound copolymer having epoxy groups.

24. The resinous composition as claimed in claim 22, wherein, in the addition reaction product, the polyarylenesulfide resin (a) and the additional resinous ingredient (A) are in a weight ratio of 30:70 to 98:2 by weight.

25. The resinous composition as claimed in claim 1, wherein the principal thermoplastic resinous ingredient (A) is preliminarily modified with the additional resinous ingredient (B) in a weight ratio of 40:60 to 98:2.

26. The resinous composition as claimed in claim 25, wherein the principal thermoplastic resinous ingredient (A) comprises a polyarylenesulfide resin alone and the additional resinous ingredient (B) comprises a vinyl compound copolymers having epoxy groups.

27. The resinous composition as claimed in claim 26, wherein the vinyl compound copolymer having epoxy groups has a number average molecular weight of 3,000 to 120,000 and is in an epoxy group concentration of $1.7 \times 10^{-4}$ to $20 \times 10^{-4}$ mol/g.